# EUROPEAN PATENT SPECIFICATION

(11) **EP 2 667 111 B1**
(45) Date of publication and mention of the grant of the patent: **12.07.2017**
(21) Application number: 12382192.8
(22) Date of filing: 23.05.2012
(51) Int. Cl.: F24H 1/10, H05B 3/00, H05B 3/60

(54) **Apparatus and method for ohmic-heating a particulate liquid**
Vorrichtung und Verfahren zur Ohm-Erwärmung einer Partikelflüssigkeit
Appareil et procédé pour chauffage ohmique d'un liquide particulaire

(43) Date of publication of application: 27.11.2013
(73) Proprietor: Amgat Citrus Products, S. A., 30100 Espinardo (ES)
(72) Inventor: Zack, Yoram, 30100 ESPINARDO (ES)
(74) Representative: ZBM Patents - Zea, Barlocci & Markvardsen

(56) References cited:
- EP-A1- 0 141 533
- EP-A1- 0 674 928
- WO-A2-2007/013829
- JP-A- 7 039 320
- US-A- 5 514 391

## Description

The invention is related to a method for ohmic-heating a particulate liquid and to an apparatus for the ohmic-heating of a particulate liquid, the apparatus comprising degassing means for degassing the liquid.

In the context of the present invention, a 'liquid' is meant to be an electrically conductive liquid and to encompass particulate liquids, i.e., liquids having solid particles mixed therein, e.g. pulpy juices.

### BACKGROUND ART

It is known to heat a conductive liquid by circulating an electric current therein through a pair of electrodes, the conductive liquid being the resistive element which is electrically heated. This is called ohmic or resistive heating and has been applied to the sterilisation of foodstuff such as fruit juices. With this technology heating is more uniform and can be completed in a very short time, but problems may arise.

For instance, if air bubbles are present in the liquid arcing may occur. Arcing is the occurrence of an electric arc, i.e., an electrical breakdown of a gas resulting from a current flowing through normally non-conductive media, such as air. Arcing can burn particles (like pulp) that may be present in the liquid (e.g. juice), resulting in black spots that render the pasteurized juice unsuitable.

Arcing can also occur when there are regions not fully filled with liquid, in which case an electric arc might jump through said empty regions (actually containing air) and calcine particles present in the liquid.

US5514391 discloses methods and apparatuses for extending the shelf life of perishable fluid foodstuffs such as dairy products, fruit juices and liquid egg products, which contain significant levels of microorganisms. Said methods and apparatuses incorporate a plurality of electric field treatment zones with cooling units between each pair of treatment zones in order to maintain the temperature of the pumpable foodstuff at a level at which microorganisms are killed in sufficient numbers and at which changes in the flavor, appearance, odor, or functionality of the foodstuff remain within acceptable ranges.

JPH0739320 discloses a heating apparatus provided with heating units each composed of a cylinder and at least two electrodes attached to the cylinder interposing a prescribed space. Each heating unit is attached to a supporting member in a state inclined at an adjustable inclination angle and a heating object is supplied from the lower end and transferred toward the upper end.

EP0141533 discloses a device for separating a volatile contaminant from a contaminated fluid. The device comprises a vacuum chamber having an internal space that may be at least partially evacuated, a rotating plate arrangement disposed within the vacuum chamber, means for introducing the contaminated fluid on to the surface of the plate arrangement, whereby small droplets of the contaminated fluid are centrifugally dispersed from the edge of the rotating plate arrangement.

EP0674928 discloses a method and apparatus for degassing a high viscosity fluid wherein a vacuum chamber is oriented vertically and is adapted for receiving a fluid at its top end and discharging it from a reservoir at its bottom end, the chamber having an assembly comprised of a slotted wide-mouthed nozzle and a channel slide member mounted within the top end so as to receive a fluid fed into the chamber. The nozzle is adapted for spreading the fluid onto the surface of the slide member which is angularly positioned downwardly towards the reservoir such that fluid on the slide member surface exhibits laminar flow as it moves downwardly.

However, these arrangements do not produce a large scale separation of the gas (e.g. air) dissolved in the intended liquid (e.g. a fruit juice), whereby arcing would still remain a serious problem when using them.

### SUMMARY OF THE INVENTION

It is an object of the present invention to provide an ohmic heating system that avoids arcing and the consequent fouling of a particulate liquid when it is ohmic-heated.

According to an aspect of the invention, the method for ohmic-heating a particulate liquid includes degassing the particulate liquid in a vacuum tank (10) prior to ohmic-heating it, the vacuum tank (10) including a vacuum pump (12), a vertical internal wall and a central region that is away from the internal walls of the tank, so that said central region is unobstructed and said degassing step comprises the substeps of:
- bringing the liquid into the tank through a sprayer (11) provided with a nozzle (13) arranged for spraying the liquid onto the vertical internal wall, thus establishing a downwards liquid flowing film on said wall while keeping the central region of the tank substantially free of liquid;
- letting the liquid film to flow down the whole length of the vertical wall, thus allowing the air present in the liquid to leave the liquid film and reach the unobstructed central region of the tank;
- extracting the air floating in said central region through an exit at the top region of the tank by means of the vacuum pump;
- collecting the deaerated liquid at the bottom region of the tank and drawing it from the tank through an outlet.

Since there is a vacuum in the tank, gas bubbles escape from the liquid film that is flowing down said internal wall of the vacuum tank and go up across said vertical central region unhindered (for example, an unobstructed cylindrical inner region of the tank), to be evacuated from the top region of the vacuum tank.

Gas bubbles in a liquid experiment an upward force (principle of Arquimedes) and a downward force (due to the surface tension of the liquid). The bigger the bubble the bigger is the upward force and the smaller is the downward force. In the vacuum tank, the thinner the film that flows down the wall of the tank the larger is the area of the wall covered by the film and the longer is the time it takes for the film to flow completely down said wall, so that even small air bubbles are subjected to less downward force and besides they have more time to escape the film and ascend through the innermost region of the tank.

So, in some embodiments, the liquid is sprayed onto at least a portion of the vertical or sloping internal walls of the vacuum tank, and the larger is said portion the more gas bubbles can escape from the liquid film.

The liquid is ohmic-heated after having been degassed (e.g. de-aerated), whereby arcing is prevented.

In some embodiments, the conduits within which the flow of liquid is ohmic-heated are kept substantially full of liquid, so that no empty or gaseous spaces are present in said conduits. A way to achieve this is by keeping the pressure in said conduits between a minimum level and a maximum level, that is, above a set level (the maximum level is a security level). Another way to achieve it is by preventing the pressure drop otherwise produced in the conduits when an end-valve is opened to discharge the ohmic-heated liquid, for example to fill containers with pasteurized juice. Another way to achieve it is by keeping the flow-rate of the liquid being ohmic-heated at substantially a set level.

According to another aspect of the invention, the apparatus for the ohmic-heating of a particulate liquid has degassing means comprising a vacuum tank and at least one sprayer arranged for spraying the liquid onto a vertical or sloping internal wall of the vacuum tank, in order to carry out the preceding method, the apparatus also comprising at least one duct or conduit for passing the degassed liquid through an ohmic-heating unit, although there may be several sprayers and the liquid may be sprayed onto at least a portion of the vertical or sloping internal walls of the vacuum tank.

Anyway, the important thing is that the surface of the film flowing down the internal walls of the vacuum tank is large, so that most of the gas bubbles in the liquid can leave the film and go up he central region of the tank (the mentioned vertical cylindrical inner region).

Some embodiments of the apparatus comprise stabilization means to keep said conduits substantially full of liquid. Said stabilization means may comprise valve means to keep the pressure in the conduits between a minimum level and a maximum level, for example a back-pressure valve located after the ohmic-heating unit, and, for security reasons, a safety valve characterized below. Or the stabilization means may comprise (or also comprise) pump means, for instance a pump arranged between the vacuum tank and the ohmic-heating unit to pump liquid through the latter.

In some embodiments said pump means comprises two or more pumping stages arranged in series, for example four pumping stages arranged in series, maybe being part of a positive pump. This arrangement reduces the flow-rate variation caused by a pressure disturbance.

The stabilization means may also comprise a safety valve arranged in parallel with the pump, in order to prevent the pressure from exceeding the maximum level.

### BRIEF DESCRIPTION OF THE DRAWINGS

Some embodiments of the present invention will be described in the following, only by way of non-limiting example, with reference to the appended drawing, in which:

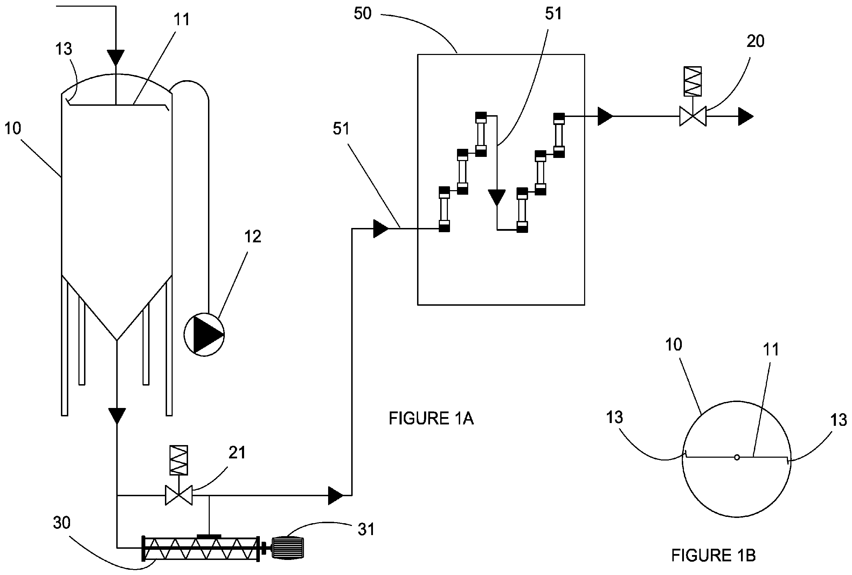

figure 1A is a schematic view of an apparatus according to the invention; and
figure 1B is a schematic sectional top view of a detail of the vacuum tank.

### DESCRIPTION OF PARTICULAR EMBODIMENTS

An apparatus for the ohmic-heating of a pulpy fruit juice (i.e. a juice having particles of fruit pulp) comprises a vacuum tank 10 for degassing (deaerating) said juice prior to ohmic-heating it. A vacuum pump 12 can provide a vacuum inside the vacuum tank 10.

The juice enters the vacuum tank through a sprayer 11 provided with one or more nozzles 13 for spraying the juice into the tank. The vacuum tank 10 has one or more vertical internal walls (it may have a substantially cylindrical shape with a vertical surface) and the nozzles 13 are arranged for spraying the juice onto the vertical walls, so that a downwards flowing film of juice can be established on said walls. The bottom region of the vacuum tank 10 may be shaped as an inverted cone and have an outlet for the deaerated juice at the tip of the cone.

In the vacuum situation prevailing in the vacuum tank 10, the air bubbles present within the juice tend to escape from the liquid. In the case of the film flowing down the vertical or sloping walls (vertical for the cylindrical portion, sloping for the conical portion), a large surface of liquid is exposed to the vacuum environment and, consequently and a lot of air can leave the liquid film and reach the central region of the tank, away from the walls. The thinner the film the longer it takes for the film to flow down the whole length of the walls and the more air bubbles can escape the liquid.

Since practically no liquid is pouring through said central region, the gaseous air can be extracted, through an exit at the top region of the tank 10, by the vacuum pump 12, unimpeded.

The nozzles 13 of the sprayer 11 can be arranged in any way that manages to cover most of the internal walls of the tank 10 with the film of juice. For example, the sprayer 11 may comprise two diametrically opposed nozzles 13 tangentially directed in opposite senses towards the cylindrical inner wall of the tank (see fig. 1B), in order to cover most of the wall with the thin film, half wall each.

Downstream from the vacuum tank 10, a pump 30 (e.g. a positive pump) can pump the degassed juice into an ohmic-heating unit 50. The pump 30 is specially designed to provide a substantially stable flow of juice because it is important that the amount of time the juice is ohmic-heated remains fairly constant, in order to raise the temperature of the liquid by a determined amount. A constant flow-rate can comply with this requirement. The pumping means 30 thus produces a substantially constant flow-rate under small but significant pressure fluctuations.

The pumping means 30 comprises an electric motor 31 and four pumping stages, for example four rotors arranged in series or a rotor four times longer and having four times as many blades, vanes or whatever the energy-transmitting element is, as a single stage pump. This arrangement can keep the flow relatively stable under such a pressure fluctuation. In effect, when, for some reason, there is a pressure disturbance after a rotary positive pump, there is a certain back-flow in the gap between the rotor and the stator of the pump and the flow-rate in the system may be lowered. But with, for example, four pumping stages, the effect of an eventual pressure disturbance is a quarter than with a single stage, and the flow-rate variation is also a quarter. And the same, of course, can be said of four pumps arranged in series.

Another advantage of such a multi-stage pumping arrangement is that it helps to keep the duct or conduits 51 for the juice in the ohmic-heating unit 50 completely filled with juice, because otherwise a reduction in the flow-rate might leave some spaces in said conduits devoid of liquid, which, as already mentioned, can cause arcing.

Downstream from the ohmic-heating unit 50, but prior to the final outlet for delivering the sterilized or pasteurized juice, there is a back-pressure or constant-pressure valve 20, that is, a valve for sustaining the upstream pressure at a preset level. This prevents pressure falls that might make the juice to boil in the ohmic-heating unit, which would utterly impair the heating of the juice. It also prevents the generation of spaces that are empty of liquid, thus contributing, together with the pumping means 30, to avoid arcing. Such a pressure fall may occur when filling barrels with pasteurized juice at said final outlet.

As shown in the figure, a safety valve 21 can be arranged upstream from the ohmic-heating unit 50, in parallel with the pumping means 30, in order to prevent the pressure in the apparatus from getting too high. The operation is as follows.

As an illustrative example, let's suppose that the chosen operational pressure is 10 bars. Then the constant-pressure valve 20 can be set to open when the pressure upstream reaches 10 bars and to close when the pressure downstream falls below 10 bars. Let's suppose that the maximum admissible pressure is 15 bars. Then the safety valve 21 can be set to open when the pressure downstream reaches, say, 14 bars, so that a closed-circuit flow into and out of the pump 30 and through the safety valve 21 can be established, thus preventing the pressure downstream from exceeding 15 bars.

Although only particular embodiments of the invention have been shown and described in the present specification, the skilled person will be able to introduce modifications and substitute any technical features thereof with others that are technically equivalent, depending on the particular requirements of each case, without departing from the scope of protection defined by the appended claims.

## Claims

1. Method for ohmic-heating a particulate liquid, including degassing the particulate liquid in a vacuum tank (10) prior to ohmic-heating it, the vacuum tank (10) including a vacuum pump (12), a vertical internal wall and a central region that is away from the internal walls of the tank, **characterized in that** said central region is unobstructed and **in that** said degassing step comprises the substeps of:
- bringing the liquid into the tank through a sprayer (11) provided with a nozzle (13) arranged for spraying the liquid onto the vertical internal wall, thus establishing a downwards liquid flowing film on said wall while keeping the central region of the tank substantially free of liquid;
- letting the liquid film to flow down the whole length of the vertical wall, thus allowing the air present in the liquid to leave the liquid film and reach the unobstructed central region of the tank;
- extracting the air floating in said central region through an exit at the top region of the tank by means of the vacuum pump;
- collecting the deaerated liquid at the bottom region of the tank and drawing it from the tank through an outlet.

2. Method according to claim 1, wherein the liquid is sprayed onto at least a portion of the vertical internal walls of the vacuum tank (10).

3. Method according to claim 1 or 2, comprising the step of pumping the deaerated liquid into an ohmic-heating unit (50).

4. Method according to any of the preceding claims, comprising the step of keeping the conduits (51) within which the flow of liquid is ohmic-heated substantially full of liquid.

5. Method according to claim 4, comprising the sub-step of keeping the pressure in said conduits (51) between a minimum level and a maximum level.

6. Method according to claim 5, comprising the sub-step of preventing the pressure drop otherwise produced in the conduits (51) when an end-valve is opened to discharge the ohmic-heated liquid.

7. Method according to any of claims 4 to 6, comprising the step of keeping the flow-rate of the liquid being ohmic-heated at substantially a set level.

8. Apparatus for the ohmic-heating of a particulate liquid, comprising degassing means (10, 11, 12) for degassing the liquid, **characterized in that** the degassing means comprises a vacuum tank (10), a vacuum pump for the vacuum tank and a sprayer (11) provided with a nozzle (13) arranged for spraying the liquid onto a vertical internal wall of the vacuum tank, in order to carry out the method of claim 1 or 2, and **in that** the apparatus comprises at least one conduit (51) for passing the degassed liquid through an ohmic-heating unit (50).

9. Apparatus according to claim 8, comprising stabilization means (20, 21, 30) to keep said conduit (51) substantially full of liquid.

10. Apparatus according to claim 9, wherein the stabilization means (20, 21, 30) comprises valve means (20, 21) to keep the pressure in said conduit (51) between a minimum level and a maximum level.

11. Apparatus according to claim 10, wherein said valve means comprises a back-pressure valve (20) located after the ohmic-heating unit (50).

12. Apparatus according to any of claims 9 to 11, wherein the stabilization means (20, 21, 30) comprises a pump (30) located between the vacuum tank (10) and the ohmic-heating unit (50).

13. Apparatus according to claim 12, wherein the pump (30) comprises two pumping stages arranged in series.

14. Apparatus according to claim 13, wherein the pump (30) comprises four pumping stages arranged in series.

15. Apparatus according to any of claims 12 to 14, wherein the stabilization means (20, 21, 30) comprise a safety valve (21) arranged in parallel with the pump (30).

## Patentansprüche

1. Verfahren zur ohmschen Erwärmung einer Partikelflüssigkeit, einschließlich des Entgasens der Partikelflüssigkeit in einem Vakuumtank (10) vor ihrer ohmschen Erwärmung, wobei der Vakuumtank (10) eine Vakuumpumpe (12), eine vertikale Innenwand und einen Mittelbereich umfasst, der entfernt von den Innenwänden des Tanks ist, **dadurch gekennzeichnet, dass** der Mittelbereich unversperrt ist und dadurch, dass der Schritt des Entgasens folgende Teilschritte umfasst:
- einleiten der Flüssigkeit in den Tank durch eine Sprüheinrichtung (11), die mit einer Düse (13) versehen ist, die zum Sprühen der Flüssigkeit auf die vertikale Innenwand angeordnet ist, wodurch ein abwärts fließender flüssiger Film auf der Wand gebildet wird, während der Mittelbereich des Tanks im Wesentlichen frei von Flüssigkeit bleibt;
- erlauben, dass der flüssige Film abwärts durch die gesamte Länge der vertikalen Wand fließt, wodurch die in der Flüssigkeit vorhandene Luft den flüssigen Film verlassen kann und den unversperrten Mittelbereich des Tanks erreichen kann;
- entnehmen der im Mittelbereich schwebenden Luft durch einen Auslass im oberen Bereich des Tanks mittels der Vakuumpumpe;
- auffangen der entlüfteten Flüssigkeit im unteren Bereich des Tanks und deren saugen aus dem Tank durch einen Auslass.

2. Verfahren nach Anspruch 1, wobei die Flüssigkeit auf mindestens einen Teil der vertikalen Innenwände des Vakuumtanks (10) gesprüht wird.

3. Verfahren nach Anspruch 1 oder 2, umfassend den Schritt, in dem die entlüftete Flüssigkeit in eine Einheit (50) zur ohmschen Erwärmung gepumpt wird.

4. Verfahren nach einem der vorhergehenden Ansprüche, umfassend den Schritt, in dem die Leitungen (51) innerhalb deren die Flüssigkeitsströmung durch ohmsche Erwärmung erhitzt wird im Wesentlichen voll mit Flüssigkeit gehalten werden.

5. Verfahren nach Anspruch 4, umfassend den Teilschritt, in dem der Druck in den Leitungen (51) zwischen einem Mindestwert und einem Höchstwert gehalten wird.

6. Verfahren nach Anspruch 5, umfassend den Teilschritt, in dem der Druckabfall verhindert wird, der ansonsten in den Leitungen (51) entsteht, wenn ein Endventil zur Entlassung der durch ohmsche Erwärmung erhitzten Flüssigkeit geöffnet wird.

7. Verfahren nach einem der Ansprüche 4 bis 6, umfassend den Schritt, in dem die Durchflussgeschwindigkeit der Flüssigkeit, die durch ohmsche Erwärmung erhitzt wird, im Wesentlichen beim Sollwert gehalten wird.

8. Vorrichtung zur ohmschen Erwärmung einer Partikelflüssigkeit, umfassend ein Entgasungsmittel (10, 11, 12) zur Entgasung der Flüssigkeit, **dadurch gekennzeichnet, dass** das Entgasungsmittel einen Vakuumtank (10), eine Vakuumpumpe für den Vakuumtank und eine Sprüheinheit (11) umfasst, die mit einer zum Sprühen der Flüssigkeit auf eine vertikale Innenwand des Vakuumtanks angeordnete Düse (13) versehen ist, um das Verfahren des Anspruchs 1 oder 2 durchzuführen, und **dadurch gekennzeichnet, dass** die Vorrichtung mindestens eine Leitung (51) zum Durchlauf der entgasten Flüssigkeit durch eine Einheit (50) zur ohmschen Erwärmung umfasst.

9. Vorrichtung nach Anspruch 8, umfassend ein Stabilisierungsmittel (20, 21, 30), um die Leitung (51) im Wesentlichen voll mit Flüssigkeit zu halten.

10. Vorrichtung nach Anspruch 9, wobei das Stabilisierungsmittel (20, 21, 30) ein Ventilmittel (20, 21) umfasst, um den Druck in der Leitung (51) zwischen einem Mindestwert und einem Höchstwert zu halten.

11. Vorrichtung nach Anspruch 10, wobei das Ventilmittel ein der Einheit (50) zur ohmschen Erwärmung nachgeschaltetes Rückschlagventil (20) umfasst.

12. Vorrichtung nach einem der Ansprüche 9 bis 11, wobei das Stabilisierungsmittel (20, 21, 30) eine zwischen dem Vakuumstank (10) und der Einheit (50) zur ohmschen Erwärmung angeordnete Pumpe (30) umfasst.

13. Vorrichtung nach Anspruch 12, wobei die Pumpe (30) zwei in Reihe geschaltete Pumpstufen umfasst.

14. Vorrichtung nach Anspruch 13, wobei die Pumpe (30) vier in Reihe geschaltete Pumpstufen umfasst.

15. Vorrichtung nach einem der Ansprüche 12 bis 14, wobei das Stabilisierungsmittel (20, 21, 30) ein parallel mit der Pumpe (30) geschaltetes Sicherheitsventil (21) umfasst.

## Revendications

1. Procédé pour le chauffage ohmique d'un liquide particulaire, incluant dégazer le liquide particulaire dans un réservoir sous vide (10) avant de son chauffage ohmique, incluant le réservoir sous vide (10) une pompe à vide (12), une paroi intérieure verticale et une région centrale qui est éloignée des parois intérieures du réservoir, **caractérisé en ce que** ladite région centrale est dégagée et **en ce que** ladite étape de dégazage comprend les sous-étapes suivantes:
- introduire le liquide dans le réservoir à travers un pulvérisateur (11) fourni avec une buse (13) disposée pour pulvériser le liquide sur la paroi intérieure verticale, établissant ainsi un film liquide coulant vers le bas sur ladite paroi tout en maintenant la région centrale du réservoir substantiellement livre de liquide;
- laisser le film liquide écouler vers le bas par toute la longueur de la paroi verticale, permettant ainsi que l'air présent dans le liquide abandonne le film liquide et atteigne la région centrale dégagée du réservoir;
- extraire l'air flottant dans ladite région centrale à travers une sortie dans la région supérieure du réservoir au moyen de la pompe à vide;
- recueillir le liquide désaéré dans la région inférieure du réservoir et l'extraire du réservoir par un orifice de sortie.

2. Procédé selon la revendication 1, dans lequel le liquide est pulvérisé sur au moins une partie des parois intérieures verticales du réservoir sous vide (10).

3. Procédé selon la revendication 1 ou 2, comprenant l'étape de pomper le liquide désaéré dans une unité de chauffage ohmique (50).

4. Procédé selon l'une quelconque des revendications précédentes, comprenant l'étape de maintenir les conduits (51) dans lesquels le flux de liquide est soumis à chauffage ohmique substantiellement pleins de liquide.

5. Procédé selon la revendication 4, comprenant la sous-étape de maintenir la pression dans lesdits conduits (51) entre une valeur minimale et une valeur maximale.

6. Procédé selon la revendication 5, comprenant la sous-étape de prévenir la chute de pression produite sinon dans les conduits (51) lorsqu'une soupape de vidange est ouverte pour évacuer le liquide soumis à chauffage ohmique.

7. Procédé selon l'une quelconque des revendications 4 à 6, comprenant l'étape de maintenir le débit du liquide étant soumis à chauffage ohmique substantiellement à une valeur de consigne.

8. Dispositif pour le chauffage ohmique d'un liquide particulaire, comprenant un moyen de dégazage (10, 11, 12) pour dégazer le liquide, **caractérisé en ce que** le moyen de dégazage comprend un réservoir sous vide (10), une pompe à vide pour le réservoir sous vide et un pulvérisateur (11) doué d'une buse (13) disposée pour pulvériser le liquide sur une paroi intérieure verticale du réservoir sous vide, afin de mettre à exécution le procédé de la revendication 1 ou 2, et **en ce que** le dispositif comprend au moins un conduit (51) pour faire passer le liquide dégazé à travers une unité de chauffage ohmique (50).

9. Dispositif selon la revendication 8, comprenant un moyen de stabilisation (20, 21, 30) pour maintenir ledit conduit (51) substantiellement plein de liquide.

10. Dispositif selon la revendication 9, dans lequel le moyen de stabilisation (20, 21, 30) comprend un moyen de soupape (20, 21) pour maintenir la pression dans ledit conduit (51) entre une valeur minimale et une valeur maximale.

11. Dispositif selon la revendication 10, dans lequel ledit moyen de soupape comprend une soupape de contre-pression (20) située après de l'unité de chauffage ohmique (50).

12. Dispositif selon l'une quelconque des revendications 9 à 11, dans lequel le moyen de stabilisation (20, 21, 30) comprend une pompe (30) située entre le réservoir sous vide (10) et l'unité de chauffage ohmique (50).

13. Dispositif selon la revendication 12, dans lequel la pompe (30) comprend deux étages de pompage disposés en série.

14. Dispositif selon la revendication 13, dans lequel la pompe (30) comprend quatre étages de pompage disposés en série.

15. Dispositif selon l'une quelconque des revendications 12 à 14, dans lequel le moyen de stabilisation (20, 21, 30) comprend une soupape de sécurité (21) disposée en parallèle avec la pompe (30).
